# EUROPEAN PATENT APPLICATION

(11) **EP 0 535 326 A2**
(43) Date of publication of application: **07.04.1993**
(21) Application number: 92113201.5
(22) Date of filing: 03.08.1992
(51) Int. Cl.: B29C 53/62

(54) **A device and a method for manufacturating pipes**

(30) Priority: 04.09.1991 IT TO910674
(71) Applicant: Stroppiana, Fernando, I-12055 Diano d'Alba (Cuneo) (IT)
(72) Inventor: Stroppiana, Fernando, I-12055 Diano d'Alba (Cuneo) (IT)
(74) Representative: Bosotti, Luciano

(57) **Abstract**

A pipe (P) is formed by the winding of a strip element (W1 ... W4) onto a generally cylindrical winding cage (2) formed by two concentric sets of rollers (4, 5), the axes of which are inclined slightly to the generatrices of the cage (2). The rotation of the rollers (4, 5) winds the strip element (W1 ...W4) in the cage (2) along a generally helical path which has an axial translational component along the cage (2) so that the pipe (P) emerges from the cage (2) through one of its end plates (3b) which has an annular hole (12) for the purpose. A helical screw thread is applied to the outer surface of the pipe (P), which may have a laminated wall constituted by superposed layers of plastics material including recycled plastics material, so that successive portions of pipe can be connected with the interposition of threaded rings.

## Description

The present invention relates in general to the manufacture of pipes and has been developed with particular attention to its possible use for manufacturing pipes from sheet materials such as, for example, plastics materials, including recycled plastics materials.

The invention is intended preferably for the manufacture of large pipes for the building industry and for the construction of drains; such pipes generally have diameters larger than 200 mm and may have diameters of 2,000 mm or more.

It is known in the art to produce pipes for this purpose by winding a strip element (a web) along a generally helical path around a mandrel. With this technical solution there is usually a problem in removing the pipe from the mandrel on which it has been formed or vice versa. In practice, this difficulty is an obstacle which is difficult to overcome as regards the possibility of producing such pipes by a continuous or substantially continuous process.

The problems become even more complex if one wishes to form a pipe with a laminated structure, that is, a pipe in which the wall is formed by the superposition of several layers of materials with different physical characteristics and mechanical strengths.

The object of the present invention is therefore to provide pipe-manufacturing means which can overcome the problems described above.

According to the present invention, this object is achieved by virtue of a device and a method having the specific characteristics recited in the following claims.

The invention will now be described, purely by way of non-limiting example, with reference to the appended drawings, in which:
Figure 1 is a general perspective view of the core of a device formed according to the invention,
Figure 2 is a plan view of the same device (with various parts removed for clarity) showing the formation of the pipes in greater detail,
Figure 3 is an end view taken on the arrow III of Figure 2,
Figure 4 is a section taken on the line IV-IV of Figure 2, and
Figure 5 is a view taken on the line V-V of Figure 2.

In the drawings, a device for manufacturing pipes is generally indicated 1. In particular, the device shown by way of example is intended for producing large-diameter pipes (for example, for use in the building industry or for the construction of drains) having a laminated wall structure made from strips of plastics material or the like, possibly including recycled and/or formulated plastics material.

The main core of the device 1 is constituted by a generally cylindrical cage 2 with rollers which is constituted, in practice, by two end plates, an upstream or input plate 3a and a downstream or output plate 3b (with reference to the direction of advance of the pipes being formed), which are kept in vertical positions on a base B and between which extend two concentric sets of rollers, which are also generally cylindrical; more precisely, there is an outer set of rollers 4 and an inner set of rollers 5.

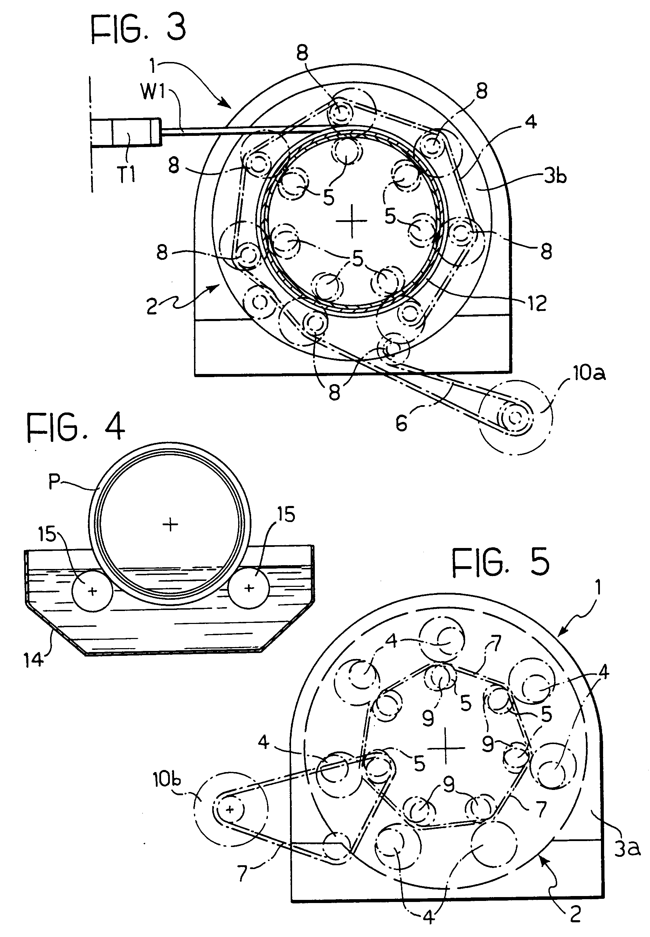

In the embodiment illustrated (see Figure 3 in particular), each set includes seven rollers (however, this number should be considered purely as an example) arranged so as to form seven pairs of homologous rollers, each pair including a roller of the outer set 4 and a roller of the inner set 5 which face each other so as together to define a space (a nip) for taking in the material which is wound up to form the pipe.

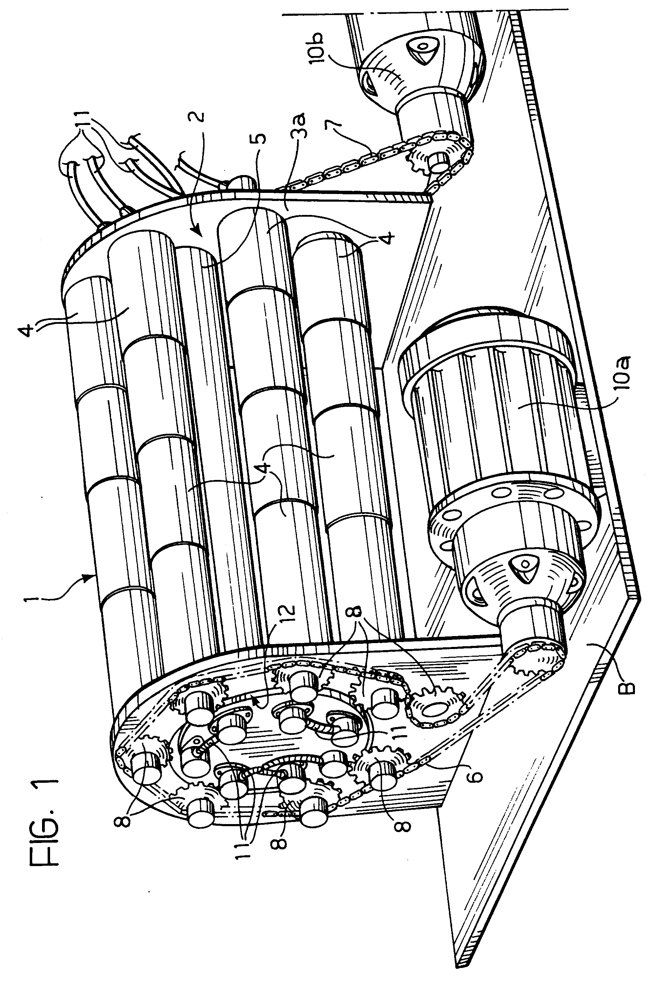

As can better be seen in Figures 1, 3 and 5, the rollers of the two sets 4, 5 are mounted on the plates 3a, 3b with the interposition of bearings which can oscillate relative to the plates 3a, 3b, the rollers being driven by respective chains 6 and 7 which pass around sprockets 8 and 9 mounted on the ends of the shafts of the rollers which project outwardly from the end plates 3a, 3b through the bearings. The chains are driven by respective drive units, indicated 10a and 10b which are independent of each other so that the speeds of the two sets of rollers 4 and 5 can be varied separately.

Moreover, it will be noted (see Figure 1) that the shafts of the rollers (which are generally hollow) are connected to distribution pipes 11, through which a cooling fluid coming from a pump (not shown) can be circulated within the rollers 4 and 5 to cool them.

The rollers 4 and 5 thus rotate about respective fixed axes identified by the positions in which the shafts of the rollers are mounted on the end plates 3a and 3b.

As stated, the cage 2 and the two sets of rollers 4 and 5 are generally cylindrical; an important characteristic of the solution according to the invention is that the shafts of the rollers 4 and 5, and hence their axes of rotation, are not oriented exactly along the generatrices (or the central axis) of the cage 2 but are inclined slightly to the generatrices, for example, at an angle of the order of 1-2^{o}, as can clearly be seen in the end view of Figure 3 (which is taken from the downstream end of the cage 2) in which the broken lines with single dots indicate the outlines of the upstream ends of the rollers 4 and 5, that is, those situated adjacent the plate 3a, and the broken lines with double dots indicate the outlines of their opposite ends adjacent the plate 3b.

In practice, the situation described is essentially comparable to the situation which would occur if, starting from an initial condition in which the axes of the rollers 4 and 5 are aligned with the generatrices and the central axis of the cage 2, the downstream plate 3b were rotated theoretically relative to the upstream plate 3a through a certain angle (for example, an angle of 10^{o} in the case of a cage having a diameter - measured between the two sets of rollers - of the order of 300-320 mm and a length of the order of one metre).

The "twisting" of the rollers 4 and 5 is preferably such that, in each pair of facing rollers, whereas their upstream ends (situated in correspondence with the plate 3a) are aligned precisely on a radius of the cage, their downstream ends (situated in correspondence with the plate 3b) are aligned on a line which does not pass exactly through the centre of the cage 2, the inner roller 5 being slightly upstream of the corresponding outer roller 4 (with reference to the sense in which the pipe is wound onto the cage 2).

In operation:
- the sense of rotation of the rollers 4 and 5 (naturally, the homologous rollers of each pair are rotated in opposite senses so that the mutually facing portions of each roller of the outer set 4 and of the corresponding roller of the inner set 5 move in the same direction) - on the one hand - and
- the orientation of the angle of inclination of the axes of the rollers 4, 5 to the generatrices of the cage 2 - on the other hand -
   are selected in a coordinated manner so that any strip element W1 supplied towards the cage 2, as shown schematically in Figure 3, in a direction generally tangential to the cage 2 or, more precisely, a strip W1 introduced into the gripping space (the nip) between two homologous rollers, one belonging to the outer set 4 and the other belonging to the inner set 5, will be wound generally around the rollers 5 of the inner set with a winding movement which, in addition to its circular or tangential component, also has an axial component (relative to the cage 2) which results in a generally translatory movement in the direction of advance towards the output end of the cage (the plate 3b).

In the specific case to which the end view of Figure 3 relates, the rollers 4 and 5 are assumed to be rotated in senses which correspond to the movement of the strip W1 from left to right and hence to the winding of the strip W1 clockwise around the rollers of the cage 2. In this case, the inclination of the axes of the rollers 4, 5 is selected so that, if they are observed from the upstream end of the cage, their downstream ends are displaced slightly clockwise relative to their upstream ends, that is, in a complementary manner, (from the viewpoint of Figure 3) so that, if they are observed from the downstream end of the cage 2, the downstream ends of the rollers 4, 5 are displaced slightly anticlockwise relative to their upstream ends.

As a result of this arrangement, the strip W1 is not wound in a circle between the rollers 4, 5 but along a helical path, the pitch of which is related to the angle at which the rollers 4, 5 are inclined to the generatrices of the cage 2.

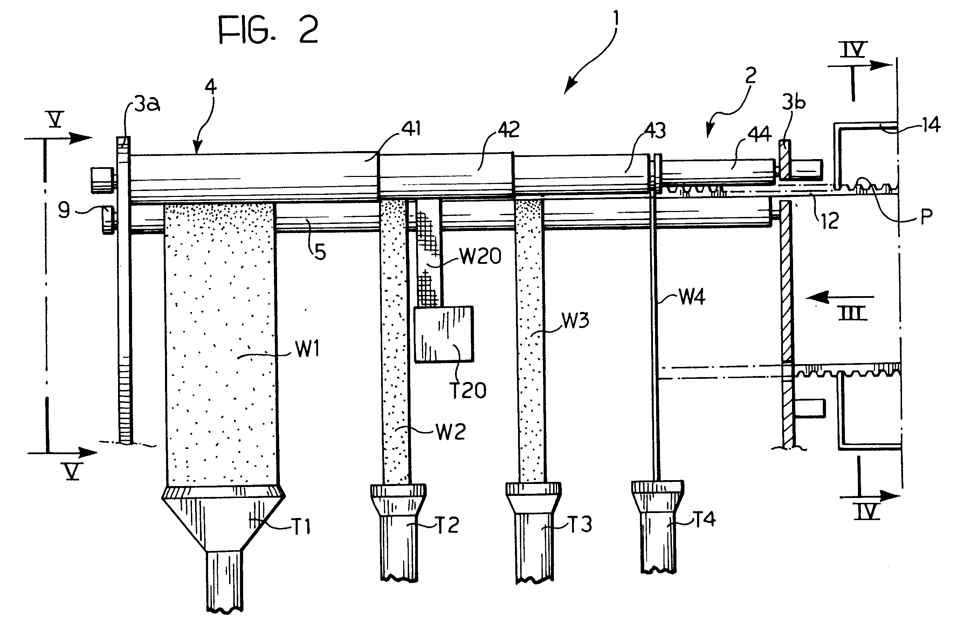

As the rollers 4, 5 rotate, the strip W1 thus gives rise to a cylindrical body, that is, a pipe P (Figure 2) which advances along the cage 2 from its upstream end (the plate 3a) to its downstream end (the plate 3b). Therefore, the end plate 3b at the downstream end has an annular hole 12 through which the pipe P thus formed can emerge from the cage and be sent, for example, to a cooling bath in a tank 14 (see Figure 4) through which the pipe formed, generally indicated P, advances axially on two support rollers 15.

The cooling is necessary, amongst other things, because the strip W1 usually emerges from a die or extruder T1 and is therefore at a fairly high temperature; its temperature is, in any case, controlled (for example, being kept at around 120-200^{o}C during the winding process) by the cooling effect of the rollers 4 and 5. This all enables a more intimate connection (seal) between successive turns of the pipe P being formed, providing the pipe P with intrinsic mechanical strength and at the same time ensuring that the strip W1 does not stick to the rollers 4, 5 and that the material being wound is not too soft.

The rollers 4 and 5 may be of uniform diameter, particularly if a pipe P is to be formed from a single strip W1 wound in a helix.

In the embodiment shown (which relates to a device 1 for manufacturing a pipe P with walls having a laminated structure, that is, a pipe produced by the helical winding of several strips), the rollers of the inner set 5 are of uniform diameter whereas the diameters of the rollers of the outer set 4 become smaller from the input end of the cage 2 towards its output end. In particular, each roller 4 may be considered as being divided theoretically into four successive portions 41, 42, 43 and 44 with gradually (stepwise or continuously decreasing diameters so that the widths of the intake spaces (the nips) created with respect to the corresponding inner rollers 5 increase in steps.

In the embodiment illustrated, the device is intended for forming a laminated pipe from:
- a first strip W1 of plastics material, for example, high-density polyethylene about 2 mm thick, to form the innermost layer of the pipe,
- a second strip W2 made, for example, of a plastics material different from that of the first layer W1; this may be at least partially recycled plastics material (if appropriate, including non-thermoplastics materials as fillers or reinforcing structures) which is intended to be wound together with a further reinforcing strip W20 (for example, a fibre fabric, wire mesh, etc.); for example, the strip W2 may be 5 mm thick;
- a third strip W3 constituted, for example, by a further plastics material produced by the recycling of waste plastics materials, and
- a further strip W4 which is narrower (measured axially of the winding path) and, in practice, is intended to form generally helical screw threads spaced at certain intervals on the outer surface of the pipe P.

As already stated, the strips W1, W2, W3 and W4 are usually supplied at a certain temperature from respective sources T1, T2, T3 and T4 which may even be constituted by extrusion heads or dies. In the case of the additional reinforcing material W20, the source T20 may be constituted, for example, by a reel from which the material is unwound. In this solution, it seems preferable, for example, for the strip W20 to be made of a woven material or mesh, for example, wire reinforcement mesh, or simply a metal wire or band.

As stated, winding at this temperature enables a connection to be formed between successive layers of the wall of the tube. If the nature of the material and/or the temperature of the process are not such as to enable or ensure the desired firm connection, the device 1 may include means for applying adhesives and/or glues between the layers which are wound successively onto the cage 2.

The presence of the outer thread W4 on the pipes formed according to the invention facilitates their connection by threaded rings. In particular, the ring (which has an internal thread complementary to the thread W4 on the pipe P) may be screwed fully onto the end of one of the pipes to be connected and the end of the other pipe then brought up to the ring. At this point, the ring is unscrewed from the first pipe and screwed onto the end of the other pipe so as to connect the two pipes. This connection may be further reinforced by a rotary movement of one of the pipes to advance it slightly inwardly of the ring; this is in accordance with the method currently used for connecting the ends of threaded pipes in hydraulic systems.

Naturally, the principle of the invention remaining the same, the details of construction and forms of embodiment may be varied widely with respect to those desecribed and illustrated, without thereby departing from the scope of the present invention.

## Claims

1. A device for manufacturing pipes (P) from at least one strip element (W1) by winding the strip element along a generally helical path, characterised in that it includes a plurality of driven (10a, 10b) rollers (4, 5) which define a substantially cylindrical winding structure (2), and means (T1 to T4) for supplying the strip element (W1) to the winding structure in a generally tangential winding direction, and in that the axes of the rollers (5) are inclined generally to the generatrices of the winding structure (2) in an arrangement such that the movement of the strip element (W1) has a longitudinal translatory component along the winding structure (2) as a result of the inclination of the rollers (4, 5) and is wound onto the winding structure (2) along a helical path, the axis of which coincides with the axis of the winding structure (2), to form a pipe (P).

2. A device according to Claim 1, characterised in that the structure (2) includes two sets of rollers (4, 5), one (4) being generally outside of the other (5).

3. A device according to Claim 2, characterised in that the rollers of the sets (4, 5) form pairs of homologous facing rollers (4, 5) which jointly define intake spaces (nips) for receiving the strip-like element (W1).

4. A device according to Claim 3, characterised in that, in one longitudinal region (3a) of the structure (2), the rollers of each pair (4, 5) are aligned on a radius of the structure (2) whereas, in the other regions (3b) of the structure, the rollers of each pair are aligned on a line which does not generally pass through the centre of the structure (2).

5. A device according to any one of Claims 2 to 4, characterised in that the rollers (4, 5) are associated with drive means (10a, 10b) which rotate the rollers of the outer set (4) and of the inner set (5) in opposite senses.

6. A device according to Claim 5, characterised in that the drive means (10a, 10b) can rotate the rollers of the sets (4, 5) at different peripheral velocities for each set.

7. A device according to any one of Claims 2 to 6, characterised in that the diameters of the rollers of at least one set (4) decrease in the direction of winding along the helical path so that the widths of the intake spaces between the rollers (4, 5) increase in the direction of winding along the path.

8. A device according to Claim 1 or Claim 7, characterised in that it includes means (T1 to T4) for supplying several strip elements (W1 to W4) to the winding structure (2) so that the pipe (P) has a laminated structure.

9. A device according to Claim 1 or Claim 8, characterised in that it has associated means (T1 to T4) for supplying the at least one strip element (W1 to W4) to the winding structure (2) in a generally heated condition.

10. A device according to Claim 1 or Claim 9, characterised in that the at least one strip element (W1) is supplied to the winding cage (2) from a source constituted by an extrusion opening or die (T1 to T4) or even from a reel (T20).

11. A device according to Claim 1 or Claim 10, characterised in that the rollers (4, 5) are associated with cooling means (11), preferably fluid cooling means.

12. A device according to Claim 1 or Claim 11, characterised in that, downstream of the winding structure (2), there is a station (14) for cooling the pipe (P).

13. A device according to Claim 12, characterised in that the cooling station essentially includes a tank (14) in which the pipe (P) is at least partially immersed in a cooling fluid.

14. A device according to Claim 12 or Claim 13, characterised in that the station in which the pipe is cooled includes roller means (15) for supporting the pipe (P).

15. A device according to any one of the preceding claims, characterised in that the winding structure (2) includes two end plates (3a, 3b) for supporting the rollers (4, 5), and in that one of the end plates (3b) has an annular hole (12) through which the pipe (P) can emerge from the winding structure (2).

16. A device according to Claim 1 or Claim 15, characterised in that the rollers (4, 5) are supported in the winding structure by respective end plates (3a, 3b), and in that the rollers (4, 5) have appendages (8, 9) which project outwardly from the end plates (3a, 3b), the drive means (6, 7, 10a, 10b) for rotating the rollers (4, 5) acting on the appendages (8, 9) outside the end plates (3a, 3b).

17. A device according to Claim 1 or Claim 16, characterised in that the drive means (10a, 10b) essentially include chain drive units (6, 7).

18. A device according to Claim 9 or Claim 11, characterised in that the rollers (4, 5) are generally hollow, and in that the cooling means (11) are formed so as to supply the cooling fluid into the cavities of the rollers (4).

19. A device according to any one of the preceding claims, characterised in that it includes means (T4) for providing the outer surface of the pipe (P) with a helical formation having the characteristics of a screw thread so as to form an external thread on the pipe (P).

20. A device according to Claim 19, characterised in that the pipe (P) is provided with the thread formation (W4) within the winding structure (2).

21. A method of forming a pipe (P) from at least one strip element (W1) wound along a generally helical path, characterised in that it includes the steps of:
- providing a plurality of rollers (4, 5) defining a substantially cylindrical winding structure,
- supplying the strip element (W1) in a winding direction generally tangential to the winding structure (2),
- inclining the axes of the rollers (5) generally to the generatrices of the winding structure (2), and
- rotating (6, 7, 10a, 10b) the rollers (4, 5) in an arrangement such that the movement of the strip element (W1) has a longitudinal translatory component along the winding structure (2) as a result of the inclination of the rollers (4,5 ) and is wound onto the winding structure (4, 5) along a helical path, the axis of which coincides with the axis of the winding structure (2), to form a pipe.

22. A method according to Claim 21, characterised in that it includes the step of winding a plurality of strip-like elements (W1 ... W4) onto the winding structure (2) so as to form a pipe (P) with a laminated wall.

23. A method according to Claim 21 or Claim 22, characterised in that the at least one strip element (W1) is made of plastics material.

24. A method according to Claim 22, characterised in that at least one of the strip elements (W1 ... W4) is made of recycled plastics material.
